# EUROPEAN PATENT SPECIFICATION

(11) **EP 3 694 252 B1**
(45) Date of publication and mention of the grant of the patent: **25.06.2025**
(21) Application number: 17930207.0
(22) Date of filing: 03.11.2017
(51) Int. Cl.: H04W 36/00, H04W 92/20

(54) **CELL SWITCHING METHOD AND DEVICE**
VERFAHREN UND VORRICHTUNG ZUR ZELLUMSCHALTUNG
PROCÉDÉ ET DISPOSITIF DE COMMUTATION DE CELLULE

(43) Date of publication of application: 12.08.2020
(73) Proprietor: Huawei Technologies Co., Ltd., Longgang District Shenzhen, Guangdong 518129 (CN)
(72) Inventor: JING, Dong, Shenzhen Guangdong 518129 (CN); YANG, Binhe, Shenzhen Guangdong 518129 (CN)
(74) Representative: Pfenning, Meinig & Partner mbB
(86) International application number: PCT/CN2017/109349
(87) International publication number: WO 2019/084914

(56) References cited:
- WO-A2-2012/134111
- CN-A- 101 166 369
- CN-A- 102 088 746
- CN-A- 104 838 693
- CN-A- 105 682 162
- US-A1- 2006 268 834
- US-A1- 2013 336 153
- US-A1- 2014 134 942
- US-B1- 6 466 556
- "3rd Generation Partnership Project; Technical Specification Group Services and System Aspects; Architecture enhancements for non-3GPP accesses (Release 8)", 8 March 2012 (2012-03-08), XP050910844, Retrieved from the Internet <URL:http://www.3gpp.org/ftp/Specs/2014-12/Rel-8/23_series/> [retrieved on 20120308]
- HUAWEI CHINA UNICOM: "Introduction of S1 context fetch", vol. RAN WG3, no. Reno, Nevada, USA; 20161114 - 20161118, 14 November 2016 (2016-11-14), XP051178864, Retrieved from the Internet <URL:http://www.3gpp.org/ftp/Meetings_3GPP_SYNC/RAN3/Docs/> [retrieved on 20161114]
- RAN3 (CONTACT: HUAWEI ET AL: "Introduction of Collocated L-GW for SIPTO@LN", vol. RAN WG2, no. San Francisco, USA; 20131111 - 20131115, 14 December 2013 (2013-12-14), XP050752464, Retrieved from the Internet <URL:http://www.3gpp.org/ftp/tsg_ran/WG2_RL2/Specifications/201312_draft_specs_after_RAN_62/> [retrieved on 20131214]
- "3rd Generation Partnership Project; Technical Specification Group Services and System Aspects; Architecture enhancements for non-3GPP accesses (Release 12)", 5 December 2014 (2014-12-05), XP050916478, Retrieved from the Internet <URL:http://www.3gpp.org/ftp/Specs/zItuInfo/M.2012-2/2014-12/Rel-12/23_series/> [retrieved on 20141205]

## Description

### TECHNICAL FIELD

This application relates to the field of mobile communications, and in particular, to a cell handover method and apparatus.

### BACKGROUND

Currently, in a communication process, a terminal selects a cell for access, and performs data exchange with a wireless communications network by using the accessed cell. When the terminal moves from coverage of the cell accessed by the terminal to coverage of another cell, the terminal needs to perform a cell handover to access the another cell.

Document "3rd Generation Partnership Project; Technical Specification Group Services and System Aspects; Architecture enhancements for non-3GPP accesses (Release 8)", (20120308), 3GPP STANDARD; 23402-8A0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Specs/2014-12/Rel-8/23_series/, (20120308), discloses a method for providing IP connectivity using non-3GPP accesses to the EVOLVED 3GPP Packet Switched domain.

Document HUAWEI CHINA UNICOM, "Introduction of S1 context fetch", vol. RAN WG3, no. Reno, Nevada, USA; 20161114 - 20161118, (20161114), 3GPP DRAFT; R3-162760 36413CR_FOR S1 CONTEXT FETCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN3/Docs/, (20161114), discloses a handover method.

Document RAN3 (CONTACT: HUAWEI ET AL, "Introduction of Collocated L-GW for SIPTO@LN", vol. RAN WG2, no. San Francisco, USA; 20131111 - 20131115, (20131214), 3GPP DRAFT; 36300_CR0602_(REL-12)_R2-134551_R3-132404, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG2_RL2/Specifications/201312_draft_specs_after _RAN_62/, (20131214), discloses a network architecture of a wireless communications network.

Document "3rd Generation Partnership Project; Technical Specification Group Services and System Aspects; Architecture enhancements for non-3GPP accesses (Release 12)", (20141205), 3GPP STANDARD; 23402-C70, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Specs/zItuInfo/M.2012-2/2014-12/Rel-12/23_series/, (20141205), discloses another method for providing IP connectivity using non-3GPP accesses to the EVOLVED 3GPP Packet Switched domain.

Document US 6,466,556 B1 discloses a method of controlling handover of real-time packet data flow within a wireless telecommunications system packet domain without disrupting communication between user equipment and the anchor packet gateway.

Document US 2006/268834 A1 discloses a wireless router which is configured to support a first subnet and a second subnet.

Document US 2013/336153 A1 discloses a method and a device for reporting terminal measurement and for inter-system operation.

Document US 2014/134942 A1 discloses a method and relay node for managing a plurality of relay nodes that is moving relative to a source network node.

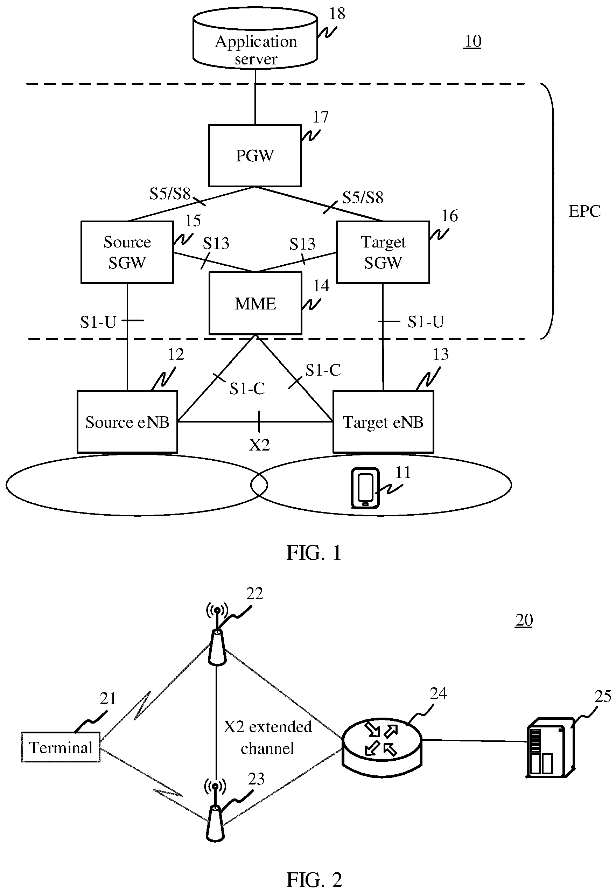

As shown in FIG. 1, a current communications system 10 includes a terminal 11, a source evolved NodeB (evolutional Node B, eNB) 12, a target eNB 13, a core network, and an application server 18 (Application Server). The terminal 11 communicates with the source eNB 12 by using a second interface, and/or the terminal 11 communicates with the target eNB 13 by using the second interface. The source eNB 12 and the target eNB 13 are any two neighboring base stations in the communications system 10, and the source eNB 12 is connected to the target eNB 13 by using an X2 interface. Each eNB is connected to the core network by using an S1 interface, and the core network is also referred to as an evolved packet core (Evolved Packet Core, EPC). The EPC mainly includes the following key logical network elements: a mobility management entity 14 (Mobility Management Entity, MME), a source serving gateway 15 (Serving Gateway, SGW), a target SGW 16, a packet data network gateway 17 (Packet Data Network Gateway, PGW), and a home subscriber server (Home Subscriber Server, HSS) (which is not shown in the figure). Both the source eNB 12 and the target eNB 13 are connected to the MME 14 by using an S1-C interface, the source eNB 12 is connected to the source SGW 15 by using an S1-U interface, and the target eNB 12 is connected to the target SGW 16 by using the S1-U interface. The MME 14 is connected to the source SGW 15 by using an S11 interface, and the MME 14 is connected to the target SGW 16 by using the S11 interface. Both the source SGW 15 and the target SGW 16 are connected to the PGW 17 by using an S5/S8 interface, and the PGW 17 is connected to the application server 18 on the Internet.

Based on the communications system 10 provided above, the related art provides a cell handover method, including: sending, by a terminal 11, a measurement report to a source eNB 12 to which a source cell accessed by the terminal 11 belongs; selecting, by the source eNB 12, a target cell for the terminal 11 when determining, based on the measurement report, that a cell handover needs to be performed, sending a handover request message to a target eNB 13 to which the target cell belongs, receiving a handover request acknowledgment message sent by the target eNB 13, and sending a radio resource control protocol (Radio Resource Control, RRC) connection reconfiguration message to the terminal 11, where the RRC connection reconfiguration message carries an identifier of the target cell; and receiving, by the terminal 11, the RRC connection reconfiguration message, disconnecting from the source eNB 12, establishing a connection to the target eNB 13 based on the identifier of the target cell, and accessing the target cell, so that the terminal 11 is handed over from the source cell to the target cell. In a process in which the terminal 11 establishes the connection to the target eNB 13, the terminal 11 is connected to a PGW 17 through signaling interaction among the target eNB 13, an MME 14, an HHS, a target SGW 16, and the PGW 17, and then accesses an application server 18 on the Internet by creating a packet data network (Packet Data Network, PDN) connection by using the PGW 17, so that the application server 18 provides a background service for an application in the terminal 11.

In the cell handover method that is based on the communications system 10, because the PGW 17 is used as a service anchor, if the PGW 17 is deployed at a location relatively far away from the target eNB 13, a relatively long service delay is caused.

### SUMMARY

To resolve a problem that a current cell handover method causes a relatively long service delay, this application provides a cell handover method and apparatus. The technical solutions are as follows:
This application provides a communications system including a source wireless gateway, a target wireless gateway, and a forwarding device, so that in a cell handover process based on the communications system, uplink data and downlink data of a terminal before and after a handover do not need to rely on a specific network element as a service anchor, and can be directly output by using the forwarding device, to shorten a service delay.

According to a first aspect, a cell handover method is provided.

The method includes:
receiving, by a source wireless gateway, a measurement report from a terminal, wherein the source wireless gateway is a gateway corresponding to a source cell;
determining, by the source wireless gateway, a target wireless gateway based on the measurement report, wherein the target wireless gateway is a gateway corresponding to a target cell, and wherein each of the source wireless gateway and the target wireless gateway has a function of authentication for access of the terminal, a handover of the terminal, mobility management and user context and bearer management of the terminal in an idle state, storing subscription information of a user, completing routing and forwarding of packet data, providing at least one of lawful interception-related functions, assignment of a user address, execution of policy control and a charging rule, and lawful interception;
sending, by the source wireless gateway, a handover request message to the target wireless gateway;
sending by the source wireless gateway, a handover instruction message to the terminal when receiving a handover request acknowledgment message from the target wireless gateway;
receiving, by the source wireless gateway, a release resource message from the target wireless gateway, wherein the release resource message is sent after the target wireless gateway sends an update request to a target port of a forwarding device, and the update request is used to instruct the forwarding device to update a port identifier corresponding to a target address to a target port identifier of the target port; and
releasing, by the source wireless gateway, a radio bearer between the terminal and the source wireless gateway based on the release resource message; wherein the forwarding device is a switch, the update request is a gratuitous address resolution protocol, ARP, packet, and both the source wireless gateway and the target wireless gateway have functions of a two-port layer 2 network device, where the two-port layer 2 network device includes a layer 2 tunnel and a bridge; or the forwarding device is a router, the update request is a link state, LS, update packet, and both the source wireless gateway and the target wireless gateway pre-establish an open shortest path first neighbor relationship with the router.

For example, a communications system includes the source wireless gateway, the target wireless gateway, and the forwarding device, both the source wireless gateway and the target wireless gateway are connected to the forwarding device by using the first interface, and the forwarding device is connected to the application server by using the first interface, so that before and after the cell handover of the terminal, uplink data and downlink data of the terminal do not need to rely on a specific network element as a service anchor, but can be directly output by using the forwarding device. This avoids a problem in the related art that time consumption is serious because both uplink data and downlink data of a terminal need to be output by using a PGW in a unified manner, thereby shortening a service delay.

In the implementation, the networking structure of the communications system is further simplified into three network elements: the source wireless gateway, the target wireless gateway, and the forwarding device respectively. This avoids a problem in the related art that signaling overheads between network elements are relatively high because there are many network elements (for example, a source eNB, a target eNB, an MME, a source SGW, a target SGW, and a PGW) in the communications system during cell handover, so that only three gateway network elements need to perform signaling interaction during cell handover, thereby greatly reducing signaling overheads between the network elements in the communications system during cell handover.

In a possible implementation of the first aspect, after the sending, by the source wireless gateway, a handover instruction message to the terminal, the method further includes:
establishing, by the source wireless gateway, an X2 extended channel with the target wireless gateway, where the X2 extended channel is configured to transmit a context transfer message of the terminal (UE Context Transfer) to the target wireless gateway.

In the implementation, the X2 extended channel is established between the source wireless gateway and the target wireless gateway, so that the context transfer message of the terminal can be directly transmitted to the target wireless gateway through the X2 extended channel. This avoids a case in which the MME can obtain the context transfer message of the terminal only through interaction between a plurality of pieces of signaling in the related art, thereby reducing signaling overheads.

After the sending, by the source wireless gateway, a handover instruction message to the terminal when receiving a handover request acknowledgment message sent by the target wireless gateway, the method further includes:
receiving, by the source wireless gateway, a release resource message sent by the target wireless gateway, where the release resource message is sent after the target wireless gateway sends an update request to a target port of the forwarding device, and the update request is used to instruct the forwarding device to update a port identifier corresponding to a target address to a target port identifier of the target port; and
releasing, by the source wireless gateway, a radio bearer between the terminal and the source wireless gateway based on the release resource message.

In this way, after the source wireless gateway sends the handover instruction message to the terminal, the source wireless gateway receives the release resource message sent by the target wireless gateway, and releases the radio bearer between the source wireless gateway and the terminal based on the release resource message, so that the radio bearer between the terminal and the source wireless gateway is released only after the radio bearer between the terminal and the target wireless gateway is established, thereby ensuring that session continuity of the terminal is not interrupted.

In the implementation, the target wireless gateway further sends the update request to the target port of the forwarding device, where the update request is used to instruct the forwarding device to update the port identifier corresponding to the target address to the target port identifier of the target port, so that the forwarding device can switch a path corresponding to the downlink data of the terminal from the source wireless gateway to the target wireless gateway, to further enable the downlink data delivered by the application server no longer to be forwarded to the target wireless gateway by using the source wireless gateway, but to be directly sent by the switch to the target wireless gateway, thereby further shortening a time length during cell handover.

The forwarding device is a switch, and the update request is a gratuitous address resolution protocol (Address Resolution Protocol, ARP) packet;
or
the forwarding device is a router, and the update request is a link state (Link State, LS) update packet.

By this, when the forwarding device is the switch, the update request sent by the target wireless gateway to the target port of the forwarding device is the ARP packet; or when the forwarding device is the router, the update request sent by the target wireless gateway to the target port of the forwarding device is the LS update packet, so that the cell handover manner is applicable to both a forwarding device (which is the switch in this case) operating in an L2 networking architecture of the communications system and a forwarding device (which is the router in this case) operating in an L3 networking architecture.

According to a second aspect, a cell handover method is provided. The method includes:
receiving, by a target wireless gateway, a handover request message from a source wireless gateway, wherein the source wireless gateway is a gateway corresponding to a source cell, and the target wireless gateway is a gateway corresponding to a target cell, and wherein each of the source wireless gateway and the target wireless gateway has a function of authentication for access of the terminal, a handover of the terminal, mobility management and user context and bearer management of the terminal in an idle state, storing subscription information of a user, completing routing and forwarding of packet data, providing at least one of lawful interception-related functions, assignment of a user address, execution of policy control and a charging rule, and lawful interception;
sending, by the target wireless gateway, a handover request acknowledgment message to the source wireless gateway;
receiving, by the target wireless gateway, a handover acknowledgment message from a terminal;
sending, by the target wireless gateway, an update request to a target port of a forwarding device, wherein the update request carries a target address, the target address is an address corresponding to the terminal, and the update request is used to instruct the forwarding device to update a port identifier corresponding to the target address to a target port identifier of the target port;
receiving, by the target wireless gateway, the downlink data forwarded by the forwarding device through the target port; and
transmitting, by the target wireless gateway, the downlink data to the terminal corresponding to the target address;
wherein the forwarding device is a switch, the update request is a gratuitous address resolution protocol, ARP, packet, and both the source wireless gateway and the target wireless gateway have functions of a two-port layer 2 network device, where the two-port layer 2 network device includes a layer 2 tunnel and a bridge; or the forwarding device is a router, the update request is a link state, LS, update packet, and both the source wireless gateway and the target wireless gateway pre-establish an open shortest path first neighbor relationship with the router.

In a possible implementation of the second aspect, after the receiving, by the target wireless gateway, a handover request message sent by the source wireless gateway, the method further includes:
establishing, by the target wireless gateway, an X2 extended channel with the source wireless gateway, where the X2 extended channel is configured to transmit a context transfer message of the terminal.

In another possible implementation of the second aspect, after the establishing, by the target wireless gateway, an X2 extended channel with the source wireless gateway, the method further includes:
receiving and buffering, by the target wireless gateway, uplink data sent by the source wireless gateway through the X2 extended channel; and
after the receiving, by the target wireless gateway, a handover acknowledgment message sent by a terminal, the method further includes: transmitting, by the target wireless gateway, the buffered uplink data to the application server by using the forwarding device.

After the receiving, by the target wireless gateway, a handover acknowledgment message sent by a terminal, the method further includes:
sending, by the target wireless gateway, an update request to a target port of the forwarding device, where the update request carries a target address, the target address is an address used when the application server sends downlink data to the terminal, and the update request is used to instruct the forwarding device to update a port identifier corresponding to the target address to a target port identifier of the target port;
receiving, by the target wireless gateway, the downlink data forwarded by the forwarding device through the target port; and
transmitting, by the target wireless gateway, the downlink data to the terminal corresponding to the target address.

The forwarding device is a switch, and the update request is a gratuitous address resolution protocol ARP packet; or the forwarding device is a router, and the update request is a link state LS update packet.

According to a third aspect, a communications system provided. The communications system includes at least a source wireless gateway, a target wireless gateway, and a forwarding device;
both the source wireless gateway and the target wireless gateway are connected to the forwarding device by using a first interface; and the source wireless gateway is configured to communicate with a terminal by using a second interface, and the target wireless gateway is configured to communicate with the terminal by using the second interface; and
the forwarding device is connected to an application server by using the first interface, where
   the source wireless gateway is a gateway corresponding to a source cell, and the target wireless gateway is a gateway corresponding to a target cell, and wherein each of the source wireless gateway and the target wireless gateway has a function of authentication for access of the terminal, a handover of the terminal, mobility management and user context and bearer management of the terminal in an idle state, storing subscription information of a user, completing routing and forwarding of packet data, providing at least one of lawful interception-related functions, assignment of a user address, execution of policy control and a charging rule, and lawful interception;
wherein the source wireless gateway is configured to receive a measurement report from the terminal; determine the target wireless gateway based on the measurement report; send a handover request message to the target wireless gateway; send a handover instruction message to the terminal when a handover request acknowledgment message is received; receive a release resource message from the target wireless gateway, wherein the release resource message is sent after the target wireless gateway sends an update request to a target port of the forwarding device,
and the update request is used to instruct the forwarding device to update a port identifier corresponding to a target address to a target port identifier of the target port;
and release a radio bearer between the terminal and the source wireless gateway based on the release resource message; and
wherein the forwarding device is a switch, the update request is a gratuitous address resolution protocol, ARP, packet, and both the source wireless gateway and the target wireless gateway have functions of a two-port layer 2 network device, where the two-port layer 2 network device includes a layer 2 tunnel and a bridge; or the forwarding device is a router, the update request is a link state, LS, update packet, both the source wireless gateway and the target wireless gateway are configured to pre-establish an open shortest path first neighbor relationship with the router.

In a possible implementation of the third aspect, the source wireless gateway is connected to the target wireless gateway by using an X2 extended channel, and the X2 extended channel is configured to transmit a context transfer message of the terminal. In another possible implementation of the third aspect, when the forwarding device operates at a data link layer, the forwarding device is a switch.

In another possible implementation of the third aspect, when the forwarding device operates at a network layer, the forwarding device is a router.

According to a fourth example, a source wireless gateway is provided, adapted to implement the method of the first aspect.

In a possible implementation of the fourth example, the processing unit is further configured to establish an X2 extended channel with the target wireless gateway, where the X2 extended channel is configured to transmit a context transfer message of the terminal.

According to a fifth example, a target wireless gateway provided, adapted to implement the method of the second aspect.

In a possible implementation of the fifth example, the processing unit is configured to establish an X2 extended channel with the source wireless gateway, where the X2 extended channel is configured to transmit a context transfer message of the terminal. In another possible implementation of the fifth example, the receiving unit is further configured to receive and buffer, by the target wireless gateway, uplink data sent by the source wireless gateway through the X2 extended channel; and
the sending unit is further configured to transmit, by the target wireless gateway, the buffered uplink data to an application server by using a forwarding device.

According to a sixth example, a computer-readable storage medium is provided.

The computer-readable storage medium stores at least one instruction, and the at least one instruction is loaded and executed by a processor, to implement the cell handover method provided in any one of the first aspect or the optional implementations of the first aspect.

According to a seventh example, a computer-readable storage medium is provided.

The computer-readable storage medium stores at least one instruction, and the at least one instruction is loaded and executed by a processor, to implement the cell handover method provided in any one of the second aspect or the optional implementations of the second aspect.

### BRIEF DESCRIPTION OF DRAWINGS

FIG. 1 is a network architecture diagram of a communications system 10 according to a related art;
FIG. 2 is a network architecture diagram of a communications system 20 according to an embodiment of this application;
FIG. 3 is a flowchart of a cell handover method according to an embodiment of this application;
FIG. 4 is a flowchart of a cell handover method according to another embodiment of this application;
FIG. 5 is a structural block diagram of a source wireless gateway according to an embodiment of this application;
FIG. 6 is a structural block diagram of a target wireless gateway according to an embodiment of this application;
FIG. 7 is a block diagram of a source wireless gateway according to another embodiment of this application; and
FIG. 8 is a block diagram of a target wireless gateway according to another embodiment of this application.

### DESCRIPTION OF EMBODIMENTS

To make the objectives, technical solutions, and advantages of this application clearer, the following further describes in detail the implementations of this application with reference to the accompanying drawings.

For ease of understanding, the following explains terms in the embodiments of this application.

Source cell: also referred to as a serving cell (Serving Cell), which is a cell that establishes a radio resource control (Radio Resource Control, RRC) connection to a terminal and provides a service for the terminal.

Target cell: also referred to as a neighboring cell (Neighbor Cell, NCell) or an adjacent cell, which is another cell different from a source cell currently accessed by the terminal. When the terminal is in an RRC connected mode, the terminal measures the neighboring cell, and reports a measurement report to a source wireless gateway. The source wireless gateway instructs, based on the measurement report, the terminal to perform cell handover between the source cell and the target cell.

FIG. 2 is a network architecture diagram of a communications system 20 according to an embodiment of this application. The communications system 20 includes a terminal 21, a source wireless gateway 22, a target wireless gateway 23, a forwarding device 24, and an application server 25.

The terminal 21 is a device that performs data communication with one or more wireless gateways (including the source wireless gateway 22 and the target wireless gateway 23). Optionally, an application program is run on the terminal 21. The terminal 21 may be a mobile terminal device, for example, the terminal 21 is a mobile phone (or referred to as a "cellular" phone) or a computer having a mobile terminal device. For example, the terminal 21 is a portable, pocket-sized, handheld, computer built-in, or vehicle-mounted mobile apparatus. When different communication protocols are used, the terminal 21 in this embodiment of this application may be referred to as a subscriber unit (Subscriber Unit), a subscriber station (Subscriber Station), a mobile station (Mobile Station), a mobile console (Mobile), a remote station (Remote Station), an access point (Access Point), a remote terminal device (Remote Terminal), an access terminal device (Access Terminal), a user apparatus (User Terminal), a user agent (User Agent), a terminal device (User Device), or user equipment (User Equipment, UE). Optionally, the terminal 21 may alternatively be a relay (Relay) device, but this embodiment is not limited thereto.

The terminal 21 is configured to hand over from a source cell to a target cell, where the source cell is a cell that provides a service for the source wireless gateway 22, and the target cell is a cell that provides a service for the target wireless gateway 23. The source cell is a cell in which the terminal 21 is located before the handover, the target cell is a cell in which the terminal 21 is located after the handover, and the source cell and the target cell are any two neighboring cells in the communications system 20.

The terminal 21 communicates with the source wireless gateway 22 by using a second interface, and/or the terminal 21 communicates with the target wireless gateway 23 by using the second interface. Optionally, when the communications system is a long term evolution (Long Term Evolution, LTE) system, the second interface is an air interface (Air Interface).

The source wireless gateway 22 and the target wireless gateway 23 are any two neighboring wireless gateways in the communications system 20. The source wireless gateway 22 may be configured to perform all radio-related functions in the source cell, and the target wireless gateway 23 may be configured to perform all radio-related functions in the target cell.

Optionally, the source wireless gateway 22 is connected to the target wireless gateway 23 through an X2 extended interface, an X2 extended channel is established between the source wireless gateway 22 and the target wireless gateway 23 by using the X2 extended interface, and the X2 extended channel is configured to transmit a context transfer message of the terminal.

Optionally, each wireless gateway (including the source wireless gateway and the target wireless gateway above) may be configured to complete processing of a signaling plane function, and the processing includes but is not limited to the following several types: authentication for access of the terminal 21, receiving and sending a message of an access stratum (Access Stratum, AS) and/or a message of a non-access stratum (Non-Access Stratum, NAS), and allocating a network resource to the terminal, where the network resource includes an Internet protocol address (English: Internet Protocol Address, IP) and a quality of service (Quality of Service, QoS) parameter that correspond to the terminal. Each wireless gateway is further configured to connect to/release a bearer of the terminal 21.

Optionally, each wireless gateway may have at least one function of a network element such as an eNB, an MME, an HSS, an SGW, or a PGW in a related art. In the related art, a function of the MME includes at least one of authentication for access of the terminal 21, a handover of the terminal 21, and mobility management and user context and bearer management of the terminal 21 in an idle state; a function of the HSS includes storing subscription information of a user; a function of the SGW includes completing routing and forwarding of packet data, and providing at least one of lawful interception-related functions; and a function of the PGW includes at least one of functions such as assignment of a user address, execution of policy control and a charging rule, and lawful interception. Both the source wireless gateway 22 and the target wireless gateway 23 are connected to the forwarding device 24 by using a first interface. Optionally, when the communications system is an LTE system, the first interface is an SGi interface.

The forwarding device 24 is configured to: receive uplink data of a terminal sent by the source wireless gateway 22 or the target wireless gateway 23, and send the uplink data of the terminal to the application server 25.

The forwarding device 24 is further configured to: receive downlink data of a terminal sent by the application server 25, determine a target address corresponding to the downlink data, and forward the downlink data to a corresponding wireless gateway based on the target address, so that the wireless gateway sends the downlink data to the terminal 21.

Optionally, the forwarding device 24 stores a correspondence between the target address and a port identifier. The forwarding, by the forwarding device 24, the downlink data to a corresponding wireless gateway based on the target address includes: after determining the target address, searching, by the forwarding device, for the port identifier corresponding to the target address, and sending the downlink data of the terminal to the corresponding wireless gateway through a port corresponding to the port identifier.

Optionally, the forwarding device 24 includes one of a switch and a router.

In a possible implementation, when the forwarding device 24 operates in an L2 networking architecture of the communications system, that is, when the forwarding device 24 operates at a data link layer, the forwarding device 24 is a switch.

Because the communications system does not naturally support the L2 networking architecture, both the source wireless gateway 22 and the target wireless gateway 23 have functions of a two-port layer 2 network device, where the two-port layer 2 network device includes a layer 2 tunnel and a bridge.

For example, the target wireless gateway 23 is used as an example. The target wireless gateway 23 establishes a generic routing encapsulation (Generic Routing Encapsulation, GRE) tunnel with the terminal 21, and encapsulates transmitted data by using the GRE tunnel. For another example, the target wireless gateway 23 establishes a bridge with the terminal 21, and forwards, through the bridge, the data based on a MAC address carried in the transmitted data.

In another possible implementation, when the forwarding device 24 operates in an L3 networking architecture of the communications system, that is, when the forwarding device 24 operates at a network layer, the forwarding device 24 is a router.

Optionally, when the forwarding device 24 is a router, both the source wireless gateway 22 and the target wireless gateway 23 pre-establish an open shortest path first (Open Shortest Path First, OSPF) neighbor relationship with the router.

For example, the target wireless gateway 23 is used as an example. The target wireless gateway 23 sends a hello packet to the terminal 21, to establish bidirectional communication between the target wireless gateway 23 and the terminal 21. After the bidirectional communication is established, the target wireless gateway 23 exchanges a series of packets with the terminal 21 to achieve database synchronization, thereby forming an OSPF neighbor relationship.

Optionally, the forwarding device 24 is deployed near the source wireless gateway 22 and the target wireless gateway 23, that is, a distance between the forwarding device 24 and the source wireless gateway 22 is less than a predetermined threshold, and a distance between the forwarding device 24 and the target wireless gateway 23 is less than a predetermined threshold.

The forwarding device 24 is connected to the application server 25 by using the first interface. Optionally, the application server 25 is configured to provide a background service for an application program in the terminal 21.

In conclusion, this embodiment of this application provides the communications system including the source wireless gateway 22, the target wireless gateway 23, and the forwarding device 24, both the source wireless gateway 22 and the target wireless gateway 23 are connected to the forwarding device 24 by using the first interface, and the forwarding device 24 is connected to the application server 25 by using the first interface, so that before and after the cell handover of the terminal, uplink data and downlink data of the terminal do not need to rely on a specific network element, that is, a PGW, as a service anchor, but some functions corresponding to the PGW are integrated into the wireless gateway, and are directly output by using the forwarding device connected to the wireless gateway. That is, the uplink data is sent to the application server by using the target wireless gateway and the forwarding device, and the downlink data is sent to the terminal by using the forwarding device and the target wireless gateway. This avoids a problem in the related art that time consumption is serious because both uplink data and downlink data of a terminal need to be output by using a PGW in a unified manner, thereby shortening a service delay.

It should be noted that the technical solution of this application may be applied to an LTE system, may be applied to a 5th generation mobile communications technology (5th-Generation, 5G) system, or may be a 5G next-generation mobile communications technology system. This is not limited in this embodiment of this application. An example in which the communications system is an LTE system is used for description below.

It should be further noted that when the communications system uses a 5G system or a 5G next-generation mobile communications technology system, the network elements may have different names in the 5G system or the 5G next-generation mobile communications technology system, but have same or similar functions. This is not limited in the embodiments of this application.

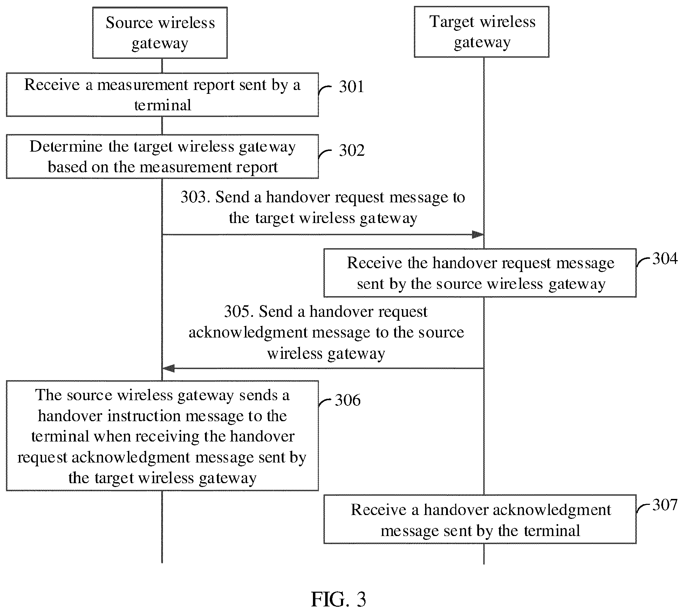

FIG. 3 is a flowchart of a cell handover method according to an embodiment of this application. This embodiment is described by using an example in which the method is applied to the communications system that is shown in FIG. 2 and that includes the source wireless gateway 22, the target wireless gateway 23, and the forwarding device 24. The method includes:
Step 301. A source wireless gateway receives a measurement report sent by a terminal. The measurement report includes signal quality of cells measured by the terminal at a current location.

The source wireless gateway delivers an RRC connection configuration message to the terminal, where the RRC connection configuration message carries a measurement configuration message, and the measurement configuration message is used to configure a measurement policy used when the terminal performs cell measurement. Correspondingly, the terminal receives the RRC connection configuration message sent by the source wireless gateway, obtains the measurement configuration message from the RRC connection configuration message, performs measurement based on the measurement configuration message, generates the measurement report, and sends the measurement report to the source wireless gateway. Correspondingly, the source wireless gateway receives the measurement report sent by the terminal.

Optionally, the measurement report includes signal quality of cells measured at a location of the terminal.

Step 302. The source wireless gateway determines a target wireless gateway based on the measurement report.

The source wireless gateway determines, based on the measurement report of the terminal, whether the terminal needs to perform a cell handover, where the cell handover is a handover of the terminal from a source cell to a target cell. The source wireless gateway is a gateway corresponding to the source cell, and the target wireless gateway is a gateway corresponding to the target cell.

Optionally, when the measurement report indicates that signal quality of a first cell is poorer than a first condition, and signal quality of a second cell is better than a second condition, the source wireless gateway determines that the terminal needs to be handed over from the source cell to the target cell, that is, determines to perform a cell handover on the terminal.

Step 303. The source wireless gateway sends a handover request message to the target wireless gateway.

After determining the target wireless gateway for the terminal, the source wireless gateway sends the handover request message to the target wireless gateway, where the handover request message is used to query the target wireless gateway about whether to allow a cell handover of the terminal.

Step 304. The target wireless gateway receives the handover request message sent by the source wireless gateway.

Correspondingly, the target wireless gateway receives the handover request message sent by the source wireless gateway, and determines whether to allow the cell handover of the terminal.

If determining not to allow the cell handover of the terminal, the target wireless gateway sends a first handover failure message to the source wireless gateway, where the first handover failure message is used to indicate that the target wireless gateway does not allow the cell handover of the terminal. Optionally, the first acknowledgment failure message is also referred to as a handover preparation failure (Handover Preparation Failure) message.

If allowing the cell handover of the terminal, the target wireless gateway reserves a corresponding resource for the terminal based on the handover request message, and performs step 305.

For example, the reserved resource includes at least one of a resource used to establish a radio bearer between the terminal and the target wireless gateway, a cell radio network temporary identifier (Cell Radio-Network Temporary Identifier, C-RNTI), a dedicated random access pilot, and the like.

Step 305. The target wireless gateway sends a handover request acknowledgment message to the source wireless gateway.

After reserving the resource, the target wireless gateway sends a handover request acknowledgment message to the source wireless gateway, where the handover request acknowledgment message is used to indicate that the target wireless gateway allows the cell handover of the terminal and reserves the corresponding resource for the terminal. Correspondingly, the source wireless gateway receives the handover request acknowledgment message sent by the target wireless gateway.

Optionally, the handover request acknowledgment message carries a dedicated access pilot allocated by the target wireless gateway to the terminal.

To avoid a case in which an MME can obtain a context transfer message of a terminal only through interaction between a plurality of pieces of signaling in a related art, after receiving the handover request acknowledgment message sent by the target wireless gateway, the source wireless gateway establishes an X2 extended channel with the target wireless gateway by using an X2 extended interface, or after sending the handover request acknowledgment message to the source wireless gateway, the target wireless gateway establishes an X2 extended channel with the source wireless gateway by using an X2 extended interface. The X2 extended channel is configured to transmit the context transfer message of the terminal.

Optionally, the source wireless gateway sends the context transfer message of the terminal to the target wireless gateway through the X2 extended channel.

The context transfer message is used to perform encryption and integrity protection on transmitted data. Optionally, the context transfer message carries a context message and a security capability parameter of the terminal. For example, the context message includes a radio access bearer (Evolved Radio Access Bearer, E-RAB) message and a historical message of the terminal, and the historical message of the terminal includes a radio resource management (Radio Resource Management, RRM) message of the terminal and/or a related message of a cell accessed by the terminal. The security capability parameter includes a negotiated security algorithm, a generated key, and the like.

The X2 extended channel is further used to transmit a sequence number status transfer message. Optionally, the source wireless gateway sends the sequence number status transfer message to the target wireless gateway through the X2 extended channel. Optionally, to ensure lossless data transmission in a cell handover process, the source wireless gateway sends the sequence number status transfer (SN Status Transfer) message to the target wireless gateway, where the sequence number status transfer message carries a sequence number (SN, Sequence Number). Correspondingly, the target wireless gateway receives the sequence number status transfer message sent by the source wireless gateway, and the target wireless gateway obtains the sequence number from the sequence number status transfer message, and determines a data transmission sequence based on the obtained sequence number during cell handover. Optionally, the sequence number status transfer message is further used to indicate a receiving state of an uplink packet data convergence protocol (Packet Data Convergence Protocol, PDCP), and a sending state of a downlink PDCP.

The source wireless gateway sends buffered service data of the terminal to the target wireless gateway through the X2 extended channel, where the service data includes uplink data and/or downlink data of the terminal buffered in the source wireless gateway. Correspondingly, the target wireless gateway receives the service data of the terminal sent by the source wireless gateway.

When an uplink between the terminal and an application server is established by using the target wireless gateway, the target wireless gateway transmits buffered uplink data to the application server by using a forwarding device. When a downlink between the terminal and the application server is established by using the target wireless gateway, the target wireless gateway transmits buffered downlink data to the terminal. However, in this case, because a radio bearer between the terminal and the target wireless gateway has not been established, the target wireless gateway first buffers the received service data of the terminal.

Step 306. The source wireless gateway sends a handover instruction message to the terminal when receiving the handover request acknowledgment message sent by the target wireless gateway.

When the source wireless gateway sends the handover instruction message to the terminal, correspondingly, the terminal receives the handover instruction message, where the handover instruction message is used to instruct the terminal to be handed over from the source cell to the target cell. The terminal determines, based on the handover instruction message, that a cell handover needs to be performed.

That the terminal determines, based on the handover instruction message, that a cell handover needs to be performed includes but is not limited to the following two possible implementations:
In a possible implementation, the handover instruction message carries a cell identifier of the target cell, and the terminal determines, based on the identifier of the target cell carried in the handover instruction message, the target wireless gateway corresponding to the target cell, and establishes a radio bearer with the target wireless gateway.

In another possible implementation, the handover instruction message carries a cell identifier of the target cell and a dedicated access pilot. After determining the target wireless gateway corresponding to the target cell, the terminal establishes a radio bearer with the target wireless gateway by using the dedicated access pilot.

A process of establishing the radio bearer between the terminal and the target wireless gateway includes: detaching, by the terminal, from the source wireless gateway, establishing synchronization with the target wireless gateway in a random access process, and sending, by the terminal, a handover acknowledgment message to the target wireless gateway, where the handover acknowledgment message is used to indicate that the terminal has been successfully handed over from the source cell to the target cell.

The detachment means removing a radio bearer between the terminal and an attachment point. The attachment point means a station associated with the terminal and providing a service for the terminal. In this embodiment, the attachment point is a source wireless gateway with which the terminal is registered.

Step 307. The target wireless gateway receives the handover acknowledgment message sent by the terminal.

The terminal sends the handover acknowledgment message to the target wireless gateway. Correspondingly, the target wireless gateway receives the handover acknowledgment message, where the handover acknowledgment message is used to indicate that the terminal has been successfully handed over from the source cell to the target cell.

At this point, the radio bearer between the terminal and the target wireless gateway is established.

In conclusion, according to this embodiment of this application, the communications system includes the source wireless gateway, the target wireless gateway, and the forwarding device, both the source wireless gateway and the target wireless gateway are connected to the forwarding device by using the first interface, and the forwarding device is connected to the application server by using the first interface, so that before and after the cell handover of the terminal, uplink data and downlink data of the terminal do not need to rely on a specific network element, that is, a PGW, as a service anchor, but some functions corresponding to the PGW are integrated into the wireless gateway, and are directly output by using the forwarding device connected to the wireless gateway. That is, the uplink data is sent to the application server by using the target wireless gateway and the forwarding device, and the downlink data is sent to the terminal by using the forwarding device and the target wireless gateway. This avoids a problem in the related art that time consumption is serious because both uplink data and downlink data of a terminal need to be output by using a PGW in a unified manner, thereby shortening a service delay.

In this embodiment of this application, the networking structure of the communications system is further simplified into three network elements: the source wireless gateway, the target wireless gateway, and the forwarding device respectively. This avoids a problem in the related art that signaling overheads between network elements are relatively high because there are many network elements (for example, a source eNB, a target eNB, an MME, a source SGW, a target SGW, and a PGW) in the communications system during cell handover, so that only three gateway network elements need to perform signaling interaction during cell handover, thereby greatly reducing signaling overheads between the network elements in the communications system during cell handover.

In this embodiment of this application, the X2 extended channel is further established between the source wireless gateway and the target wireless gateway, so that the context transfer message of the terminal can be directly transmitted to the target wireless gateway through the X2 extended channel. This avoids a case in which the MME can obtain the context transfer message of the terminal only through interaction between a plurality of pieces of signaling in the related art, thereby reducing signaling overheads. It should be noted that when the terminal establishes the radio bearer with the target wireless gateway, it indicates that the uplink between the terminal and the application server is established by using the target wireless gateway. When the terminal sends the uplink data of the terminal to the target wireless gateway, the target wireless gateway receives and sends the uplink data of the terminal to the forwarding device. Correspondingly, the forwarding device receives and sends the uplink data of the terminal to the application server.

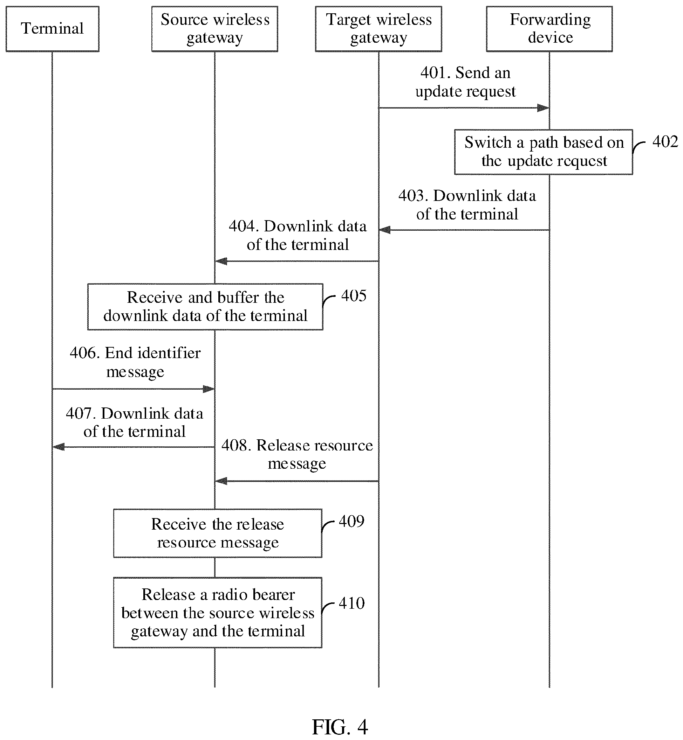

However, in this case, the downlink data sent by the application server to the terminal still needs to pass through the source wireless gateway, and then is forwarded by the source wireless gateway to the target wireless gateway. Therefore, to enable the downlink data delivered by the application server no longer to be forwarded to the target wireless gateway by using the source wireless gateway, but to be directly sent by a switch to the target wireless gateway, refer to a downlink handover process in a cell handover method provided in FIG. 4.

Based on the cell handover method provided in FIG. 3, referring to FIG. 4, after step 307, the following several steps are further included.

Step 401. The target wireless gateway sends an update request to a target port of the forwarding device.

Correspondingly, the forwarding device receives, through the target port, the update request sent by the target wireless gateway.

The update request carries a target address, where the target address is an address used when the application server sends the downlink data to the terminal. The update request is used to instruct the forwarding device to update a port identifier corresponding to the target address to a target port identifier of the target port.

Step 402. The forwarding device performs path switching based on the update request. The path switching is switching a path corresponding to the downlink data of the terminal from the source wireless gateway to the target wireless gateway.

Optionally, the performing, by the forwarding device, path switching includes: determining, by the forwarding device when receiving, through the target port, the update request sent by the target wireless gateway, the target port identifier corresponding to the target port, obtaining the target address carried in the update request, and updating the port identifier corresponding to the target address to the target port identifier.

Optionally, the forwarding device stores a correspondence between the target address and the port identifier, where the port identifier is used to indicate a port between the forwarding device and a wireless gateway that is accessed by the terminal; and the forwarding device is configured to forward data from the application server through the port.

For example, the correspondence between the target address and the port identifier in the forwarding device is shown in Table 1. In Table 1, the forwarding device stores three target addresses: a target address "T01", a target address "T02", and a target address "T03" respectively. A port identifier corresponding to the target address "T01" is "P02", a port identifier corresponding to the target address "T02" is "P00", and a port identifier corresponding to the target address "T03" is "P01".

**Table 1**

| Target address | Port identifier |
|---|---|
| T01 | P02 |
| T02 | P00 |
| T03 | P01 |

Based on the correspondence provided in Table 1, in an example, when receiving, through the target port 5, an update request that carries a target address "T01", the forwarding device determines a target port identifier "P05" corresponding to the target port 5, and updates a port identifier "P02" corresponding to the target address "T01" to the target port identifier "P05".

When the cell handover manner is applied to an L2 networking architecture of a communications system, the forwarding device is a switch. When the cell handover manner is applied to an L3 networking architecture of a communications system, the forwarding device is a router. In a possible implementation, the forwarding device is a switch, the update request is an ARP packet, and the target address is a media access control (Media Access Control, MAC) address.

In the implementation, the switch stores a MAC address table, where the MAC address table includes a correspondence between a MAC address of the terminal and a port identifier. For example, the correspondence between the MAC address and the port identifier in the switch is shown in Table 2. In Table 2, the switch stores two MAC addresses: a MAC address "MAC01" and a MAC address "MAC02" respectively. A port identifier corresponding to the MAC address "MAC01" is "P00", and a port identifier corresponding to the MAC address "MAC02" is "P01".

**Table 2**

| MAC address | Port identifier |
|---|---|
| MAC01 | P00 |
| MAC02 | P01 |

In another possible implementation, the forwarding device is a router, the update request is an LS update packet, and the target address is an IP address.

In the implementation, the router stores a routing table, where the routing table includes a correspondence between an IP address of the terminal and a port identifier. For example, the correspondence between the IP address and the port identifier in the router is shown in Table 3. In Table 3, the router stores two IP addresses: an IP address "IP01" and an IP address "IP02" respectively. A port identifier corresponding to the IP address "IP01" is "P00", and a port identifier corresponding to the IP address "IP02" is "P01".

**Table 3**

| IP address | Port identifier |
|---|---|
| IP01 | P00 |
| IP02 | P01 |

Step 403. The application server sends the downlink data of the terminal to the forwarding device.

Correspondingly, the forwarding device receives the downlink data of the terminal that is sent by the application server.

Step 404. The forwarding device sends the downlink data of the terminal to the target wireless gateway through the target port.

When receiving the downlink data of the terminal from the application server, the forwarding device determines the target address corresponding to the downlink data, searches the forwarding device for the port identifier corresponding to the target address, and sends the downlink data of the terminal to the target wireless gateway through the port corresponding to the port identifier.

Step 405. The target wireless gateway receives and buffers the downlink data of the terminal that is forwarded by the forwarding device through the target port.

When the target wireless gateway receives the downlink data sent by the forwarding device, because it is considered that buffered downlink data forwarded by the source wireless gateway to the target wireless gateway may not be completely forwarded, that is, in this case, the source wireless gateway still buffers downlink data of the terminal, the target wireless gateway also buffers the downlink data from the forwarding device. Step 406. The source wireless gateway sends an end marker message to the target wireless gateway.

Optionally, when clearing the buffered service data of the terminal, the source wireless gateway sends an end marker (End Marker) message to the target wireless gateway, where the end marker message is used to indicate that the service data of the terminal buffered in the source wireless gateway is cleared. Correspondingly, the target wireless gateway receives the end marker message sent by the source wireless gateway.

Step 407. The target wireless gateway transmits the downlink data of the terminal to the terminal corresponding to the target address.

The target wireless gateway sends the buffered downlink data to the terminal when receiving the end marker message.

It should be noted that, after the target wireless gateway receives the end marker message, when receiving the downlink data forwarded by the forwarding device through the target port, the target wireless gateway directly sends the downlink data to the terminal corresponding to the target address, and does not need to buffer the downlink data.

Step 408. The target wireless gateway sends a release resource message to the source wireless gateway.

To ensure that session continuity of the terminal is not interrupted, after sending the update request to the target port of the forwarding device, the target wireless gateway sends the release resource message to the source wireless gateway.

The release resource (Release Resource) message is used to instruct the source wireless gateway to release a radio bearer between the source wireless gateway and the terminal. The target wireless gateway sends the release resource message to the source wireless gateway through the X2 extended channel. Correspondingly, the source wireless gateway receives the release resource message sent by the target wireless gateway. Step 409. The source wireless gateway receives the release resource message sent by the target wireless gateway.

The release resource message is sent after the target wireless gateway sends the update request to the target port of the forwarding device.

Step 410. The source wireless gateway releases the radio bearer between the source wireless gateway and the terminal based on the release resource message.

The source wireless gateway releases the radio bearer between the source wireless gateway and the terminal based on the release resource message, where the radio bearer includes an air interface resource used by the terminal. At this point, the third process in the cell handover process is completely performed.

In conclusion, according to this embodiment of this application, after the source wireless gateway sends the handover instruction message to the terminal, the source wireless gateway receives the release resource message sent by the target wireless gateway, and releases the radio bearer between the source wireless gateway and the terminal based on the release resource message, so that the radio bearer between the terminal and the source wireless gateway is released only after the radio bearer between the terminal and the target wireless gateway is established, thereby ensuring that session continuity of the terminal is not interrupted.

According to this embodiment of this application, when the forwarding device is the switch, the update request sent by the target wireless gateway to the target port of the forwarding device is the ARP packet; or when the forwarding device is the router, the update request sent by the target wireless gateway to the target port of the forwarding device is the LS update packet, so that the cell handover manner is applicable to both a forwarding device (which is the switch in this case) operating in an L2 networking architecture of the communications system and a forwarding device (which is the router in this case) operating in an L3 networking architecture.

According to this embodiment of this application, the target wireless gateway further sends the update request to the target port of the forwarding device, where the update request is used to instruct the forwarding device to update the port identifier corresponding to the target address to the target port identifier of the target port. In one aspect, the forwarding device is enabled to switch a path corresponding to the downlink data of the terminal from the source wireless gateway to the target wireless gateway, to further enable the downlink data delivered by the application server no longer to be forwarded to the target wireless gateway by using the source wireless gateway, but to be directly sent by the switch to the target wireless gateway, thereby further shortening a time length during cell handover, and improving cell handover efficiency. In another aspect, because the forwarding device stores the correspondence between the target address and the port identifier, the forwarding device updates the port identifier corresponding to the target address when receiving the update request, so that the target address of the terminal can remain unchanged during cell handover.

The following is an apparatus embodiment of this application. For a part that is not described in detail in the apparatus embodiment, refer to the details in the foregoing method embodiment.

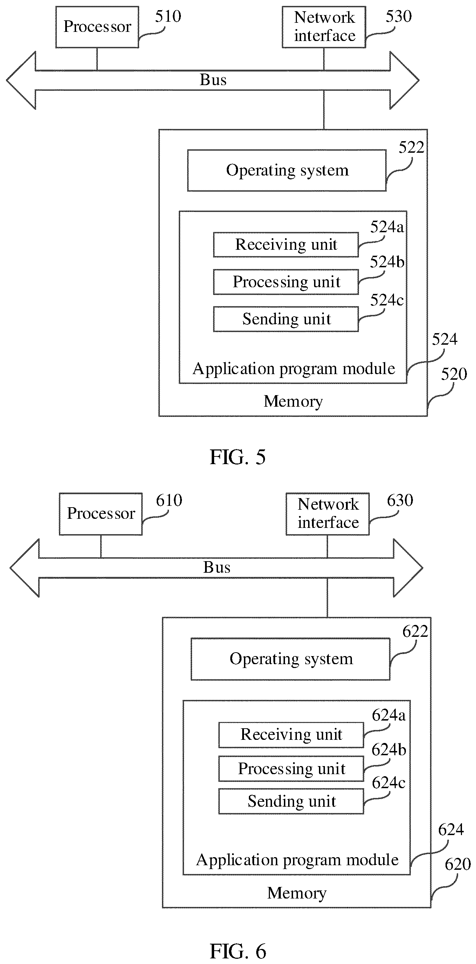

FIG. 5 is a structural block diagram of a source wireless gateway according to an embodiment of this application. The source wireless gateway includes a processor 510, a memory 520, and a communications interface 530.

The processor 510 is separately connected to the memory 520 and the communications interface 530 by using a bus.

The communications interface 530 is configured to implement communication with another network element.

The processor 510 includes one or more processing cores. The processor 510 runs an operating system or an application program module, to implement functions of the source wireless gateway in the foregoing method embodiments.

Optionally, the memory 520 may store an operating system 522 and an application program module 524 required by at least one function. Optionally, the application program module 524 includes a receiving unit 524a, a processing unit 524b, and a sending unit 524c. The receiving unit 524a is configured to implement a step related to receiving. The processing unit 524b is configured to implement a step related to calculation or processing. The sending unit 524c is configured to implement a step related to sending.

In addition, the memory 520 may be implemented by any type of volatile or non-volatile storage device or a combination thereof, for example, a static random access memory (SRAM), an electrically erasable programmable read-only memory (EEPROM), an erasable programmable read-only memory (EPROM), or a programmable read-only memory (PROM), a read-only memory (ROM), a magnetic memory, a flash memory, a magnetic disk, or an optical disc.

A person skilled in the art may understand that the structure shown in FIG. 5 does not constitute a limitation on the source wireless gateway, and the source wireless gateway may include more or fewer components than those shown in the figure, or combine some components, or have different component arrangements.

FIG. 6 is a structural block diagram of a target wireless gateway according to an embodiment of this application. The target wireless gateway includes a processor 610, a memory 620, and a communications interface 630.

The processor 610 is separately connected to the memory 620 and the communications interface 630 by using a bus.

The communications interface 630 is configured to implement communication with another network element, for example, when communicating with a terminal, the communications interface 630 is an air interface, or when communicating with a forwarding device, the communications interface 630 is an SGi interface.

The processor 610 includes one or more processing cores. The processor 610 runs an operating system or an application program module, to implement functions of the target wireless gateway in the foregoing method embodiments.

Optionally, the memory 620 may store an operating system 622 and an application program module 624 required by at least one function. Optionally, the application program module 624 includes a receiving unit 624a, a processing unit 624b, and a sending unit 624c. The receiving unit 624a is configured to implement a step related to receiving. The processing unit 624b is configured to implement a step related to calculation or processing. The sending unit 624c is configured to implement a step related to sending.

In addition, the memory 620 may be implemented by any type of volatile or non-volatile storage device or a combination thereof, for example, a static random access memory (SRAM), an electrically erasable programmable read-only memory (EEPROM), an erasable programmable read-only memory (EPROM), or a programmable read-only memory (PROM), a read-only memory (ROM), a magnetic memory, a flash memory, a magnetic disk, or an optical disc.

A person skilled in the art may understand that the structure shown in FIG. 6 does not constitute a limitation on the target wireless gateway, and the target wireless gateway may include more or fewer components than those shown in the figure, or combine some components, or have different component arrangements.

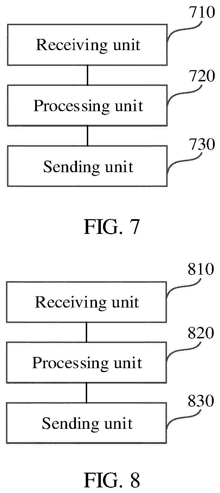

FIG. 7 is a block diagram of a source wireless gateway according to another embodiment of this application. The source wireless gateway includes a receiving unit 710, a processing unit 720, and a sending unit 730.

The receiving unit 710 is configured to implement receiving steps such as step 301, step 405, and step 409 in the embodiment in FIG. 3 or the embodiment in FIG. 4, and other implicit receiving steps performed by the source wireless gateway.

The processing unit 720 is configured to implement processing steps such as step 302 and step 410 in the embodiment in FIG. 3 or the embodiment in FIG. 4, and other implicit processing steps performed by the source wireless gateway.

The sending unit 730 is configured to implement sending steps such as step 303, step 306, and step 407 in the embodiment in FIG. 3 or the embodiment in FIG. 4, and other implicit sending steps performed by the source wireless gateway.

The receiving unit 710 may be implemented by the processor 510 in FIG. 5 by executing the receiving module 524a in the memory 520. The processing unit 720 may be implemented by the processor 510 in FIG. 5 by executing the processing module 524b in the memory 520. The sending unit 730 may be implemented by the processor 510 in FIG. 5 by executing the sending module 524c in the memory 520.

FIG. 8 is a block diagram of a target wireless gateway according to another embodiment of this application. The target wireless gateway includes a receiving unit 810, a processing unit 820, and a sending unit 830.

The receiving unit 810 is configured to implement receiving steps such as step 304 and step 307 in the embodiment in FIG. 3 or the embodiment in FIG. 4, and other implicit receiving steps performed by the target wireless gateway.

The processing unit 820 is configured to implement processing steps that are performed by the target wireless gateway and that are implicit in the embodiment in FIG. 3 or the embodiment in FIG. 4.

The sending unit 830 is configured to implement sending steps such as step 305, step 401, step 404, and step 408 in the embodiment in FIG. 3 or the embodiment in FIG. 4, and other implicit sending steps performed by the target wireless gateway.

The receiving unit 810 may be implemented by the processor 610 in FIG. 6 by executing the receiving module 624a in the memory 620. The processing unit 820 may be implemented by the processor 610 in FIG. 6 by executing the processing module 624b in the memory 620. The sending unit 830 may be implemented by the processor 610 in FIG. 6 by executing the sending module 624c in the memory 620.

It should be noted that an embodiment of this application further provides a source wireless gateway. The source wireless gateway includes a chip and at least one network interface. The chip includes a programmable logic circuit and/or a program instruction. When the chip is run, the chip is configured to implement the cell handover method provided in the foregoing method embodiments.

An embodiment of this application further provides a target wireless gateway. The target wireless gateway includes a chip and at least one network interface. The chip includes a programmable logic circuit and/or a program instruction. When the chip is run, the chip is configured to implement the cell handover method provided in the foregoing method embodiments.

An embodiment of this application further provides a computer-readable storage medium. The computer-readable storage medium stores at least one instruction, and the at least one instruction is loaded and executed by a processor to implement the cell handover method provided in the foregoing method embodiments.

An embodiment of this application further provides a computer-readable storage medium. The computer-readable storage medium stores at least one instruction, and the at least one instruction is loaded and executed by a processor to implement the cell handover method provided in the foregoing method embodiments.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, or an optical disc.

## Claims

1. A cell handover method, the method comprises:
receiving (301), by a source wireless gateway (22), a measurement report from a terminal (21), wherein the source wireless gateway (22) is a gateway corresponding to a source cell;
determining (302), by the source wireless gateway (22), a target wireless gateway (23) based on the measurement report, wherein the target wireless gateway (23) is a gateway corresponding to a target cell, and wherein each of the source wireless gateway (22) and the target wireless gateway (23) has a function of authentication for access of the terminal (21), a handover of the terminal (21), mobility management and user context and bearer management of the terminal (21) in an idle state, storing subscription information of a user, completing routing and forwarding of packet data, providing at least one of lawful interception-related functions, assignment of a user address, execution of policy control and a charging rule, and lawful interception;
sending (303), by the source wireless gateway (22), a handover request message to the target wireless gateway (23);
sending (306) by the source wireless gateway (22), a handover instruction message to the terminal (21) when receiving a handover request acknowledgment message from the target wireless gateway (23);
receiving (409), by the source wireless gateway (22), a release resource message from the target wireless gateway (23), wherein the release resource message is sent after the target wireless gateway (23) sends an update request to a target port of a forwarding device (24), and the update request is used to instruct the forwarding device (24) to update a port identifier corresponding to a target address to a target port identifier of the target port; and
releasing (410), by the source wireless gateway (22), a radio bearer between the terminal (21) and the source wireless gateway (22) based on the release resource message;
wherein the forwarding device (24) is a switch, the update request is a gratuitous address resolution protocol, ARP, packet, and both the source wireless gateway (22) and the target wireless gateway (23) have functions of a two-port layer 2 network device, where the two-port layer 2 network device includes a layer 2 tunnel and a bridge; or the forwarding device (24) is a router, the update request is a link state, LS, update packet, and both the source wireless gateway (22) and the target wireless gateway (23) pre-establish an open shortest path first neighbor relationship with the router.

2. The method according to claim 1, wherein after the sending (306), by the source wireless gateway (22), a handover instruction message to the terminal (21), the method further comprises:
establishing, by the source wireless gateway (22), an X2 extended channel with the target wireless gateway (23), wherein the X2 extended channel is configured to transmit a context transfer message of the terminal (21).

3. A cell handover method, the method comprises:
receiving (304), by a target wireless gateway (23), a handover request message from a source wireless gateway (22), wherein the source wireless gateway (22) is a gateway corresponding to a source cell, and the target wireless gateway (23) is a gateway corresponding to a target cell, and wherein each of the source wireless gateway (22) and the target wireless gateway (23) has a function of authentication for access of the terminal (21), a handover of the terminal (21), mobility management and user context and bearer management of the terminal (21) in an idle state, storing subscription information of a user, completing routing and forwarding of packet data, providing at least one of lawful interception-related functions, assignment of a user address, execution of policy control and a charging rule, and lawful interception;
sending (305), by the target wireless gateway (23), a handover request acknowledgment message to the source wireless gateway (22);
receiving (307), by the target wireless gateway (23), a handover acknowledgment message from a terminal (21);
sending (401), by the target wireless gateway (23), an update request to a target port of a forwarding device (24), wherein the update request carries a target address, the target address is an address corresponding to the terminal (21), and the update request is used to instruct the forwarding device (24) to update a port identifier corresponding to the target address to a target port identifier of the target port;
receiving (403), by the target wireless gateway (23), the downlink data forwarded by the forwarding device (24) through the target port; and
transmitting (404), by the target wireless gateway (23), the downlink data to the terminal (21) corresponding to the target address;
wherein the forwarding device (24) is a switch, the update request is a gratuitous address resolution protocol, ARP, packet, and both the source wireless gateway (22) and the target wireless gateway (23) have functions of a two-port layer 2 network device, where the two-port layer 2 network device includes a layer 2 tunnel and a bridge; or the forwarding device (24) is a router, the update request is a link state, LS, update packet, and both the source wireless gateway (22) and the target wireless gateway (23) pre-establish an open shortest path first neighbor relationship with the router.

4. The method according to claim 3, wherein after the receiving (304), by the target wireless gateway (23), a handover request message from the source wireless gateway (22), the method further comprises:
establishing, by the target wireless gateway (23), an X2 extended channel with the source wireless gateway (22), wherein the X2 extended channel is configured to transmit a context transfer message of the terminal (21).

5. The method according to claim 4, wherein after the establishing, by the target wireless gateway (23), an X2 extended channel with the source wireless gateway (22), the method further comprises:
receiving and buffering, by the target wireless gateway (23), uplink data from the source wireless gateway (22) through the X2 extended channel; and
after the receiving (307), by the target wireless gateway (23), a handover acknowledgment message from a terminal (21), the method further comprises:
transmitting, by the target wireless gateway (21), the buffered uplink data to the application server by using the forwarding device (24).

6. A communications system, wherein the communications system comprises at least a source wireless gateway (22), a target wireless gateway (23), and a forwarding device (24);
both the source wireless gateway (22) and the target wireless gateway (23) are connected to the forwarding device (24) by using a first interface; and the source wireless gateway (22) is configured to communicate with a terminal (21) by using a second interface, and the target wireless gateway (23) is configured to communicate with the terminal (21) by using the second interface; and
the forwarding device (24) is connected to an application server by using the first interface, wherein
the source wireless gateway (22) is a gateway corresponding to a source cell, and the target wireless gateway (23) is a gateway corresponding to a target cell, and wherein each of the source wireless gateway (22) and the target wireless gateway (23) has a function of authentication for access of the terminal (21), a handover of the terminal (21), mobility management and user context and bearer management of the terminal (21) in an idle state, storing subscription information of a user, completing routing and forwarding of packet data, providing at least one of lawful interception-related functions, assignment of a user address, execution of policy control and a charging rule, and lawful interception;
wherein the source wireless gateway (22) is configured to receive a measurement report from the terminal (21); determine the target wireless gateway (23) based on the measurement report; send a handover request message to the target wireless gateway (23); send a handover instruction message to the terminal (21) when a handover request acknowledgment message is received; receive a release resource message from the target wireless gateway (23), wherein the release resource message is sent after the target wireless gateway (23) sends an update request to a target port of the forwarding device (24), and the update request is used to instruct the forwarding device (24) to update a port identifier corresponding to a target address to a target port identifier of the target port; and release a radio bearer between the terminal (21) and the source wireless gateway (22) based on the release resource message; and
wherein the forwarding device (24) is a switch, the update request is a gratuitous address resolution protocol, ARP, packet, and both the source wireless gateway (22) and the target wireless gateway (23) have functions of a two-port layer 2 network device, where the two-port layer 2 network device includes a layer 2 tunnel and a bridge; or the forwarding device (24) is a router, the update request is a link state, LS, update packet, and both the source wireless gateway (22) and the target wireless gateway (23) are configured to pre-establish an open shortest path first neighbor relationship with the router.

7. The communications system according to claim 6, wherein the source wireless gateway (22) is connected to the target wireless gateway (23) by using an X2 extended channel, and the X2 extended channel is configured to transmit a context transfer message of the terminal (21).

8. An apparatus, comprising at least one processor and a memory storing computer instructions that when executed by the at least one of processor, cause the apparatus to perform the method described in claim 1 or 2.

9. An apparatus, comprising at least one processor and a memory storing computer instructions that when executed by the at least one of processor, cause the apparatus to perform the method described in any one of claims 3 to 5.

10. A computer-readable storage medium, wherein the computer-readable storage medium stores at least one instruction, and the at least one instruction is loaded and executed by a processor to implement the cell handover method according to claim 1 or 2.

11. A computer-readable storage medium, wherein the computer-readable storage medium stores at least one instruction, and the at least one instruction is loaded and executed by a processor to implement the cell handover method according to any one of claims 3 to 5.

## Patentansprüche

1. Zellübergabeverfahren, wobei das Verfahren umfasst:
Empfangen (301), durch ein Quell-Drahtlos-Gateway (22), eines Messberichts von einem Endgerät (21), wobei das Quell-Drahtlos-Gateway (22) ein Gateway ist, das einer Quellzelle entspricht;
Bestimmen (302), durch das Quell-Drahtlos-Gateway (22), eines Ziel-Drahtlos-Gateways (23) basierend auf dem Messbericht, wobei das Ziel-Drahtlos-Gateway (23) ein Gateway ist, das einer Zielzelle entspricht, und wobei das Quell-Drahtlos-Gateway (22) und das Ziel-Drahtlos-Gateway (23) jeweils eine Funktion zur Authentifizierung für den Zugriff auf das Endgerät (21), zur Übergabe des Endgeräts (21), zur Mobilitätsverwaltung und Benutzerkontext- und Trägerverwaltung des Endgeräts (21) in einem Ruhezustand, zum Speichern von Subskriptionsinformationen eines Benutzers, zum Abschließen des Routings und Weiterleitens von Paketdaten, zum Bereitstellen von mindestens einem aus Funktionen in Bezug auf ein rechtmäßiges Abfangen, zur Zuweisung einer Benutzeradresse, zur Ausführung einer Richtlinienkontrolle und einer Gebührenregel und zum rechtmäßigen Abfangen aufweisen;
Senden (303), durch das Quell-Drahtlos-Gateway (22), einer Übergabeanforderungsnachricht an das Ziel-Drahtlos-Gateway (23);
Senden (306), durch das Quell-Drahtlos-Gateway (22), einer Übergabeanweisungsnachricht an das Endgerät (21), wenn eine Übergabeanforderungsbestätigungsnachricht von dem Ziel-Drahtlos-Gateway (23) empfangen wird;
Empfangen (409), durch das Quell-Drahtlos-Gateway (22), einer Ressourcenfreigabenachricht von dem Ziel-Drahtlos-Gateway (23), wobei die Ressourcenfreigabenachricht gesendet wird, nachdem das Ziel-Drahtlos-Gateway (23) eine Aktualisierungsanforderung an einen Zielanschluss einer Weiterleitungsvorrichtung (24) gesendet hat, und die Aktualisierungsanforderung verwendet wird, um die Weiterleitungsvorrichtung (24) anzuweisen, eine Anschlusskennung, die einer Zieladresse entspricht, auf eine Zielanschlusskennung des Zielanschlusses zu aktualisieren; und
Freigeben (410), durch das Quell-Drahtlos-Gateway (22), eines Funkträgers zwischen dem Endgerät (21) und dem Quell-Drahtlos-Gateway (22) basierend auf der Ressourcenfreigabenachricht;
wobei die Weiterleitungsvorrichtung (24) ein Switch ist, die Aktualisierungsanforderung ein Gratuitous-Address-Resolution-Protocol-Paket, ARP-Paket, ist und sowohl das Quell-Drahtlos-Gateway (22) als auch das Ziel-Drahtlos-Gateway (23) Funktionen einer Ebene-2-Netzwerkvorrichtung mit zwei Anschlüssen aufweisen, wobei die Ebene-2-Netzwerkvorrichtung mit zwei Anschlüssen einen Ebene-2-Tunnel und eine Bridge einschließt; oder die Weiterleitungsvorrichtung (24) ein Router ist, die Aktualisierungsanforderung ein Link-State-Aktualisierungspaket, LS-Aktualisierungspaket, ist und sowohl das Quell-Drahtlos-Gateway (22) als auch das Ziel-Drahtlos-Gateway (23) eine Erster-Nachbar-Beziehung des offenen kürzesten Pfads mit dem Router vorab einrichten.

2. Verfahren nach Anspruch 1, wobei nach dem Senden (306), durch das Quell-Drahtlos-Gateway (22), einer Übergabeanweisungsnachricht an das Endgerät (21) das Verfahren ferner umfasst:
Einrichten, durch das Quell-Drahtlos-Gateway (22), eines erweiterten X2-Kanals mit dem Ziel-Drahtlos-Gateway (23), wobei der erweiterte X2-Kanal konfiguriert ist, um eine Kontextübertragungsnachricht des Endgeräts (21) zu übertragen.

3. Zellübergabeverfahren, wobei das Verfahren umfasst:
Empfangen (304), durch ein Ziel-Drahtlos-Gateway (23), einer Übergabeanforderungsnachricht von einem Quell-Drahtlos-Gateway (22), wobei das Quell-Drahtlos-Gateway (22) ein Gateway ist, das einer Quellzelle entspricht, und das Ziel-Drahtlos-Gateway (23) ein Gateway ist, das einer Zielzelle entspricht, und wobei das Quell-Drahtlos-Gateway (22) und das Ziel-Drahtlos-Gateway (23) jeweils eine Funktion zur Authentifizierung für den Zugriff auf das Endgerät (21), zur Übergabe des Endgeräts (21), zur Mobilitätsverwaltung und Benutzerkontext- und Trägerverwaltung des Endgeräts (21) in einem Ruhezustand, zum Speichern von Subskriptionsinformationen eines Benutzers, zum Abschließen des Routings und Weiterleitens von Paketdaten, zum Bereitstellen von mindestens einem aus Funktionen in Bezug auf ein rechtmäßiges Abfangen, zur Zuweisung einer Benutzeradresse, zur Ausführung einer Richtlinienkontrolle und einer Gebührenregel und zum rechtmäßigen Abfangen aufweisen;
Senden (305), durch das Ziel-Drahtlos-Gateway (23), einer Übergabeanforderungsbestätigungsnachricht an das Quell-Drahtlos-Gateway (22);
Empfangen (307), durch das Ziel-Drahtlos-Gateway (23), einer Übergabebestätigungsnachricht von einem Endgerät (21);
Senden (401), durch das Ziel-Drahtlos-Gateway (23), einer Aktualisierungsanforderung an einen Zielanschluss einer Weiterleitungsvorrichtung (24), wobei die Aktualisierungsanforderung eine Zieladresse transportiert, die Zieladresse eine Adresse ist, die dem Endgerät (21) entspricht, und die Aktualisierungsanforderung verwendet wird, um die Weiterleitungsvorrichtung (24) anzuweisen, eine Anschlusskennung, die der Zieladresse entspricht, auf eine Zielanschlusskennung des Zielanschlusses zu aktualisieren;
Empfangen (403), durch das Ziel-Drahtlos-Gateway (23), der Downlink-Daten, die durch die Weiterleitungsvorrichtung (24) über den Zielanschluss weitergeleitet werden; und
Übertragen (404), durch das Ziel-Drahtlos-Gateway (23), der Downlink-Daten an das Endgerät (21), das der Zieladresse entspricht;
wobei die Weiterleitungsvorrichtung (24) ein Switch ist, die Aktualisierungsanforderung ein Gratuitous-Address-Resolution-Protocol-Paket, ARP-Paket, ist und sowohl das Quell-Drahtlos-Gateway (22) als auch das Ziel-Drahtlos-Gateway (23) Funktionen einer Ebene-2-Netzwerkvorrichtung mit zwei Anschlüssen aufweisen, wobei die Ebene-2-Netzwerkvorrichtung mit zwei Anschlüssen einen Ebene-2-Tunnel und eine Bridge einschließt; oder die Weiterleitungsvorrichtung (24) ein Router ist, die Aktualisierungsanforderung ein Link-State-Aktualisierungspaket, LS-Aktualisierungspaket, ist und sowohl das Quell-Drahtlos-Gateway (22) als auch das Ziel-Drahtlos-Gateway (23) eine Erster-Nachbar-Beziehung des offenen kürzesten Pfads mit dem Router vorab einrichten.

4. Verfahren nach Anspruch 3, wobei nach dem Empfangen (304), durch das Ziel-Drahtlos-Gateway (23), einer Übergabeanforderungsnachricht von dem Quell-Drahtlos-Gateway (22) das Verfahren ferner umfasst:
Einrichten, durch das Ziel-Drahtlos-Gateway (23), eines erweiterten X2-Kanals mit dem Quell-Drahtlos-Gateway (22), wobei der erweiterte X2-Kanal konfiguriert ist, um eine Kontextübertragungsnachricht des Endgeräts (21) zu übertragen.

5. Verfahren nach Anspruch 4, wobei nach dem Einrichten, durch das Ziel-Drahtlos-Gateway (23), eines erweiterten X2-Kanals mit dem Quell-Drahtlos-Gateway (22) das Verfahren ferner umfasst:
Empfangen und Puffern, durch das Ziel-Drahtlos-Gateway (23), von Uplink-Daten von dem Quell-Drahtlos-Gateway (22) über den erweiterten X2-Kanal; und
nach dem Empfangen (307), durch das Ziel-Drahtlos-Gateway (23), einer Übergabebestätigungsnachricht von einem Endgerät (21) das Verfahren ferner umfasst:
Übertragen, durch das Ziel-Drahtlos-Gateway (21), der gepufferten Uplink-Daten an den Anwendungsserver durch Verwenden der Weiterleitungsvorrichtung (24).

6. Kommunikationssystem, wobei das Kommunikationssystem mindestens ein Quell-Drahtlos-Gateway (22), ein Ziel-Drahtlos-Gateway (23) und eine Weiterleitungsvorrichtung (24) umfasst;
sowohl das Quell-Drahtlos-Gateway (22) als auch das Ziel-Drahtlos-Gateway (23) durch Verwenden einer ersten Schnittstelle mit der Weiterleitungsvorrichtung (24) verbunden sind und das Quell-Drahtlos-Gateway (22) konfiguriert ist, um durch Verwenden einer zweiten Schnittstelle mit einem Endgerät (21) zu kommunizieren, und das Ziel-Drahtlos-Gateway (23) konfiguriert ist, um durch Verwenden der zweiten Schnittstelle mit dem Endgerät (21) zu kommunizieren; und
die Weiterleitungsvorrichtung (24) durch Verwenden der ersten Schnittstelle mit einem Anwendungsserver verbunden ist, wobei
das Quell-Drahtlos-Gateway (22) ein Gateway ist, das einer Quellzelle entspricht, und das Ziel-Drahtlos-Gateway (23) ein Gateway ist, das einer Zielzelle entspricht, und wobei das Quell-Drahtlos-Gateway (22) und das Ziel-Drahtlos-Gateway (23) jeweils eine Funktion zur Authentifizierung für den Zugriff auf das Endgerät (21), zur Übergabe des Endgeräts (21), zur Mobilitätsverwaltung und Benutzerkontext- und Trägerverwaltung des Endgeräts (21) in einem Ruhezustand, zum Speichern von Subskriptionsinformationen eines Benutzers, zum Abschließen des Routings und Weiterleitens von Paketdaten, zum Bereitstellen von mindestens einem aus Funktionen in Bezug auf ein rechtmäßiges Abfangen, zur Zuweisung einer Benutzeradresse, zur Ausführung einer Richtlinienkontrolle und einer Gebührenregel und zum rechtmäßigen Abfangen aufweisen;
wobei das Quell-Drahtlos-Gateway (22) konfiguriert ist, um einen Messbericht von dem Endgerät (21) zu empfangen; das Ziel-Drahtlos-Gateway (23) basierend auf dem Messbericht zu bestimmen; eine Übergabeanforderungsnachricht an das Ziel-Drahtlos-Gateway (23) zu senden; eine Übergabeanweisungsnachricht an das Endgerät (21) zu senden, wenn eine Übergabeanforderungsbestätigungsnachricht empfangen wird; eine Ressourcenfreigabenachricht von dem Ziel-Drahtlos-Gateway (23) zu empfangen, wobei die Ressourcenfreigabenachricht gesendet wird, nachdem das Ziel-Drahtlos-Gateway (23) eine Aktualisierungsanforderung an einen Zielanschluss der Weiterleitungsvorrichtung (24) gesendet hat, und die Aktualisierungsanforderung verwendet wird, um die Weiterleitungsvorrichtung (24) anzuweisen, eine Anschlusskennung, die einer Zieladresse entspricht, auf eine Zielanschlusskennung des Zielanschlusses zu aktualisieren; und einen Funkträger zwischen dem Endgerät (21) und dem Quell-Drahtlos-Gateway (22) basierend auf der Ressourcenfreigabenachricht freizugeben; und
wobei die Weiterleitungsvorrichtung (24) ein Switch ist, die Aktualisierungsanforderung ein Gratuitous-Address-Resolution-Protocol-Paket, ARP-Paket, ist und sowohl das Quell-Drahtlos-Gateway (22) als auch das Ziel-Drahtlos-Gateway (23) Funktionen einer Ebene-2-Netzwerkvorrichtung mit zwei Anschlüssen aufweisen, wobei die Ebene-2-Netzwerkvorrichtung mit zwei Anschlüssen einen Ebene-2-Tunnel und eine Bridge einschließt; oder die Weiterleitungsvorrichtung (24) ein Router ist, die Aktualisierungsanforderung ein Link-State-Aktualisierungspaket, LS-Aktualisierungspaket, ist und sowohl das Quell-Drahtlos-Gateway (22) als auch das Ziel-Drahtlos-Gateway (23) konfiguriert sind, um eine Erster-Nachbar-Beziehung des offenen kürzesten Pfads vorab mit dem Router einzurichten.

7. Kommunikationssystem nach Anspruch 6, wobei das Quell-Drahtlos-Gateway (22) durch Verwenden eines erweiterten X2-Kanals mit dem Ziel-Drahtlos-Gateway (23) verbunden ist und der erweiterte X2-Kanal konfiguriert ist, um eine Kontextübertragungsnachricht des Endgeräts (21) zu übertragen.

8. Einrichtung, die mindestens einen Prozessor und einen Speicher, der Computeranweisungen speichert, die, wenn sie durch den mindestens einen Prozessor ausgeführt werden, die Einrichtung veranlassen, das Verfahren nach Anspruch 1 oder 2 durchzuführen, umfasst.

9. Einrichtung, die mindestens einen Prozessor und einen Speicher, der Computeranweisungen speichert, die, wenn sie durch den mindestens einen Prozessor ausgeführt werden, die Einrichtung veranlassen, das Verfahren nach einem der Ansprüche 3 bis 5 durchzuführen, umfasst.

10. Computerlesbares Speichermedium, wobei das computerlesbare Speichermedium mindestens eine Anweisung speichert und die mindestens eine Anweisung durch einen Prozessor geladen und ausgeführt wird, um das Zellübergabeverfahren nach Anspruch 1 oder 2 zu implementieren.

11. Computerlesbares Speichermedium, wobei das computerlesbare Speichermedium mindestens eine Anweisung speichert und die mindestens eine Anweisung durch einen Prozessor geladen und ausgeführt wird, um das Zellübergabeverfahren nach einem der Ansprüche 3 bis 5 zu implementieren.

## Revendications

1. Procédé de transfert de cellules, le procédé comprend :
la réception (301), par une passerelle sans fil source (22), d'un rapport de mesure en provenance d'un terminal (21), dans lequel la passerelle sans fil source (22) est une passerelle correspondant à une cellule source ;
la détermination (302), par la passerelle sans fil source (22), d'une passerelle sans fil cible (23) sur la base du rapport de mesure, dans lequel la passerelle sans fil cible (23) est une passerelle correspondant à une cellule cible, et dans lequel chacune de la passerelle sans fil source (22) et de la passerelle sans fil cible (23) a une fonction d'authentification pour un accès au terminal (21), un transfert du terminal (21), une gestion de mobilité et une gestion de contexte utilisateur et de support du terminal (21) dans un état d'inactivité, le stockage d'informations d'abonnement d'un utilisateur, l'achèvement d'un routage et d'une retransmission de paquets de données, la fourniture d'au moins l'une parmi des fonctions liées à une interception légale, une attribution d'une adresse utilisateur, une exécution de commande de politique et d'une règle de tarification, ainsi qu'une interception légale ;
l'envoi (303), par la passerelle sans fil source (22), d'un message de demande de transfert à la passerelle sans fil cible (23) ;
l'envoi (306), par la passerelle sans fil source (22), d'un message d'instruction de transfert au terminal (21) lors de la réception d'un message d'accusé de réception de demande de transfert en provenance de la passerelle sans fil cible (23) ;
la réception (409), par la passerelle sans fil source (22), d'un message de ressource de libération en provenance de la passerelle sans fil cible (23), dans lequel le message de ressource de libération est envoyé après que la passerelle sans fil cible (23) a envoyé une demande de mise à jour à un port cible d'un dispositif de retransmission (24), et la demande de mise à jour est utilisée pour instruire au dispositif de retransmission (24) de mettre à jour un identifiant de port correspondant à une adresse cible vers un identifiant de port cible du port cible ; et
la libération (410), par la passerelle sans fil source (22), d'un support radio entre le terminal (21) et la passerelle sans fil source (22) sur la base du message de ressource de libération ;
dans lequel le dispositif de retransmission (24) est un commutateur, la demande de mise à jour est un paquet de protocole de résolution d'adresse, ARP, gratuit, et la passerelle sans fil source (22) et la passerelle sans fil cible (23) ont toutes deux des fonctions de dispositif de réseau de couche 2 à deux ports, ou le dispositif de réseau de couche 2 à deux ports comporte un tunnel de couche 2 et un pont ; ou le dispositif de retransmission (24) est un routeur, la demande de mise à jour est un paquet de mise à jour d'état de liaison, LS, et la passerelle sans fil source (22) et la passerelle sans fil cible (23) établissent toutes deux au préalable une relation ouverte de premier voisin par le chemin le plus court avec le routeur.

2. Procédé selon la revendication 1, dans lequel, après l'envoi (306), par la passerelle sans fil source (22), d'un message d'instruction de transfert au terminal (21), le procédé comprend en outre :
l'établissement, par la passerelle sans fil source (22), d'un canal étendu X2 avec la passerelle sans fil cible (23), dans lequel le canal étendu X2 est configuré pour transmettre un message de transfert de contexte du terminal (21).

3. Procédé de transfert de cellules, le procédé comprend :
la réception (304), par une passerelle sans fil cible (23), d'un message de demande de transfert en provenance d'une passerelle sans fil source (22), dans lequel la passerelle sans fil source (22) est une passerelle correspondant à une cellule source, et la passerelle sans fil cible (23) est une passerelle correspondant à une cellule cible, et dans lequel chacune de la passerelle sans fil source (22) et de la passerelle sans fil cible (23) a une fonction d'authentification pour un accès au terminal (21), un transfert du terminal (21), une gestion de mobilité et une gestion de contexte utilisateur et de support du terminal (21) dans un état d'inactivité, le stockage d'informations d'abonnement d'un utilisateur, l'achèvement d'un routage et d'une retransmission de paquets de données, la fourniture d'au moins l'une parmi des fonctions liées à une interception légale, une attribution d'une adresse utilisateur, une exécution d'une commande de politique et d'une règle de tarification, ainsi qu'une interception légale ;
l'envoi (305), par la passerelle sans fil cible (23), d'un message d'accusé de réception de demande de transfert à la passerelle sans fil source (22) ;
la réception (307), par la passerelle sans fil cible (23), d'un message d'accusé de réception de transfert en provenance d'un terminal (21) ;
l'envoi (401), par la passerelle sans fil cible (23), d'une demande de mise à jour à un port cible d'un dispositif de retransmission (24), dans lequel la demande de mise à jour porte une adresse cible, l'adresse cible est une adresse correspondant au terminal (21), et la demande de mise à jour est utilisée pour instruire au dispositif de retransmission (24) de mettre à jour un identifiant de port correspondant à l'adresse cible vers un identifiant de port cible du port cible
la réception (403), par la passerelle sans fil cible (23), des données de liaison descendante retransmises par le dispositif de retransmission (24) par le biais du port cible ; et
la transmission (404), par la passerelle sans fil cible (23), des données en liaison descendante au terminal (21) correspondant à l'adresse cible ;
dans lequel le dispositif de retransmission (24) est un commutateur, la demande de mise à jour est un paquet de protocole de résolution d'adresse, ARP, gratuit, et la passerelle sans fil source (22) et la passerelle sans fil cible (23) ont toutes deux des fonctions de dispositif de réseau de couche 2 à deux ports, ou le dispositif de réseau de couche 2 à deux ports comporte un tunnel de couche 2 et un pont ; ou le dispositif de retransmission (24) est un routeur, la demande de mise à jour est un paquet de mise à jour d'état de liaison, LS, et la passerelle sans fil source (22) et la passerelle sans fil cible (23) établissent toutes deux au préalable une relation ouverte de premier voisin par le chemin le plus court avec le routeur.

4. Procédé selon la revendication 3, dans lequel, après la réception (304), par la passerelle sans fil cible (23), d'un message de demande de transfert en provenance de la passerelle sans fil source (22), le procédé comprend en outre :
l'établissement, par la passerelle sans fil cible (23), d'un canal étendu X2 avec la passerelle sans fil source (22), dans lequel le canal étendu X2 est configuré pour transmettre un message de transfert de contexte du terminal (21).

5. Procédé selon la revendication 4, dans lequel, après l'établissement, par la passerelle sans fil cible (23), d'un canal étendu X2 avec la passerelle sans fil source (22), le procédé comprend en outre :
la réception et la mise en mémoire tampon, par la passerelle sans fil cible (23), de données de liaison montante en provenance de la passerelle sans fil source (22) par le biais du canal étendu X2 ; et
après la réception (307), par la passerelle sans fil cible (23), d'un message d'accusé de réception de transfert en provenance d'un terminal (21), le procédé comprend en outre : la transmission, par la passerelle sans fil cible (21), des données de liaison montante mises en mémoire tampon au serveur d'application en utilisant le dispositif de retransmission (24).

6. Système de communications, dans lequel le système de communications comprend au moins une passerelle sans fil source (22), une passerelle sans fil cible (23) et un dispositif de retransmission (24) ;
la passerelle sans fil source (22) et la passerelle sans fil cible (23) sont toutes deux connectées au dispositif de retransmission (24) en utilisant une première interface ; et la passerelle sans fil source (22) est configurée pour communiquer avec un terminal (21) en utilisant une seconde interface, et la passerelle sans fil cible (23) est configurée pour communiquer avec le terminal (21) en utilisant la seconde interface ; et
le dispositif de retransmission (24) est connecté à un serveur d'application en utilisant la première interface, dans lequel
la passerelle sans fil source (22) est une passerelle correspondant à une cellule source, et la passerelle sans fil cible (23) est une passerelle correspondant à une cellule cible, et dans lequel chacune de la passerelle sans fil source (22) et de la passerelle sans fil cible (23) a une fonction d'authentification pour un accès du terminal (21), un transfert du terminal (21), une gestion de mobilité et une gestion de contexte utilisateur et de support du terminal (21) dans un état d'inactivité, le stockage d'informations d'abonnement d'un utilisateur, l'achèvement d'un routage et d'une retransmission de paquets de données, la fourniture d'au moins l'une parmi des fonctions liées à une interception légale, une attribution d'une adresse utilisateur, une exécution d'une commande de politique et d'une règle de tarification, ainsi qu'une interception légale ;
dans lequel la passerelle sans fil source (22) est configurée pour recevoir un rapport de mesure en provenance du terminal (21) ; déterminer la passerelle sans fil cible (23) sur la base du rapport de mesure ; envoyer un message de demande de transfert à la passerelle sans fil cible (23) ; envoyer un message d'instruction de transfert au terminal (21) après la réception d'un message d'accusé de réception de demande de transfert ; recevoir un message de ressource de libération en provenance de la passerelle sans fil cible (23), dans lequel le message de ressource de libération est envoyé après que la passerelle sans fil cible (23) a envoyé une demande de mise à jour à un port cible du dispositif de retransmission (24), et la demande de mise à jour est utilisée pour instruire au dispositif de retransmission (24) de mettre à jour un identifiant de port correspondant à une adresse cible vers un identifiant de port cible du port cible ; et libérer un support radio entre le terminal (21) et la passerelle sans fil source (22) sur la base du message de ressource de libération ; et
dans lequel le dispositif de retransmission (24) est un commutateur, la demande de mise à jour est un paquet de protocole de résolution d'adresse, ARP, gratuit, et la passerelle sans fil source (22) et la passerelle sans fil cible (23) ont toutes deux des fonctions de dispositif de réseau de couche 2 à deux ports, le dispositif de réseau de couche 2 à deux ports comportant un tunnel de couche 2 et un pont ; ou le dispositif de retransmission (24) est un routeur, la demande de mise à jour est un paquet de mise à jour d'état de liaison, LS, et la passerelle sans fil source (22) et la passerelle sans fil cible (23) sont toutes deux configurées pour établir au préalable une relation ouverte de premier voisin par le chemin le plus court avec le routeur.

7. Système de communications selon la revendication 6, dans lequel la passerelle sans fil source (22) est connectée à la passerelle sans fil cible (23) en utilisant un canal étendu X2, et le canal étendu X2 est configuré pour transmettre un message de transfert de contexte du terminal (21).

8. Appareil, comprenant au moins un processeur et une mémoire stockant des instructions informatiques qui, lorsqu'elles sont exécutées par l'au moins un processeur, amènent l'appareil à réaliser le procédé selon la revendication 1 ou 2.

9. Appareil, comprenant au moins un processeur et une mémoire stockant des instructions informatiques qui, lorsqu'elles sont exécutées par l'au moins un processeur, amènent l'appareil à réaliser le procédé selon l'une quelconque des revendications 3 à 5.

10. Support de stockage lisible par ordinateur, dans lequel le support de stockage lisible par ordinateur stocke au moins une instruction, et l'au moins une instruction est chargée et exécutée par un processeur pour mettre en œuvre le procédé de transfert de cellules selon la revendication 1 ou 2.

11. Support de stockage lisible par ordinateur, dans lequel le support de stockage lisible par ordinateur stocke au moins une instruction, et l'au moins une instruction est chargée et exécutée par un processeur pour mettre en œuvre le procédé de transfert de cellules selon l'une quelconque des revendications 3 à 5.
